# EUROPEAN PATENT SPECIFICATION

(11) **EP 3 101 842 B1**
(45) Date of publication and mention of the grant of the patent: **06.11.2019**
(21) Application number: 16172682.3
(22) Date of filing: 02.06.2016
(51) Int. Cl.: H04L 12/24, G06F 3/0484, G06F 3/0481

(54) **METHOD, SYSTEM AND COMPUTER READABLE MEDIUM FOR NETWORK MANAGEMENT AUTOMATION**
VERFAHREN, SYSTEM UND COMPUTERLESBARES MEDIUM ZUR NETZWERKVERWALTUNGSAUTOMATISIERUNG
PROCÉDÉ, SYSTÈME ET SUPPORT LISIBLE PAR ORDINATEUR POUR AUTOMATISATION DE GESTION DE RÉSEAU

(30) Priority: 02.06.2015 US 201562169995 P; 05.06.2015 US 201562171795 P; 05.06.2015 US 201562171802 P; 01.12.2015 US 201514956096
(43) Date of publication of application: 07.12.2016
(73) Proprietor: NetBrain Technologies, Inc., Burlington, MA 01803 (US)
(72) Inventor: GAO, Lingping, Lexington, MA 02420 (US); LIAO, Guangdong, Concord, MA 01742 (US); WANG, Zhekuan, 100096 Beijing (CN)
(74) Representative: Hoffmann Eitle

(56) References cited:
- US-A1- 2004 194 088
- US-A1- 2010 260 066
- US-A1- 2012 198 082
- US-A1- 2014 280 831
- SCHMIDT C ET AL: "DO-IT-YOURSELF TMN APPLICATIONS BY VISUAL PROGRAMMING METHODS", IEEE COMMUNICATIONS MAGAZINE, IEEE SERVICE CENTER, PISCATAWAY, US, vol. 33, no. 11, 1 November 1995 (1995-11-01), pages 72-76, XP000545288, ISSN: 0163-6804, DOI: 10.1109/35.471261

## Description

This disclosure relates generally to network management. More specifically, it relates to system and method for creating and executing network applications that can automate network tasks such as documenting a network design and troubleshooting certain types of network problems.

### BACKGROUND

In a traditional network management method, a network professional usually runs a set of standard commands and processes manually for each network device. The commands and parameters associated therewith, however, are difficult to remember and cumbersome to use. In addition, repeated data retrieval has to be conducted for each individual network device in the network. For a large network containing many devices, pinpointing a network issue to a small number of de vices is difficult to accomplish.

Moreover, network devices in the same network may not be of the same type. For example, devices may be from different vendors, operated under different operation systems, and equipped with different command sets. Therefore, a command suitable for one device may not be executable by another device in the same network.

Because it is difficult to efficiently and effectively retrieve information from different network devices, it is also difficult to combine, compare, and/or analyze data from these devices. As a result, some network management tasks, such as neighbor check, path analysis, etc. are difficult to accomplish in an efficient manner.

To overcome or mitigate the problems set forth above, many types of network management tools have been developed to automate network management tasks. However, most of these tools are only applicable to certain types of network tasks and difficult to customize. Because of this inflexibility, network professionals may still have to manually tackle various network management problems. For example, some may create script-based applications to improve efficiency of solving particular tasks using script language such as Perl. Creating such an application from the scratch using script language, however, is difficult and time consuming.

US 2010/0260066 relates to a method for performing network discovery. A network manager device iteratively queries each unqueried device in a network inventory to request each device's neighbour address table.

US 2004/0194088 relates to a method for concurrently managing network devices. A plurality of scripts are executed, each of which is customized for a particular type of network device.

Schmidt et al., "Do-It-Yourself TMN Applications by Visual Programming Methods" (IEEE Communications Magazine, 1995, Vol. 33, No. 11, pages 72-76) relates to a graphical editor for constructing Telecommunications Network Management applications.

US 2014/0280831 discloses methods for visual programming, which allow network engineers to perform network management and network data analysis tasks without having to write scripts.

US 2012/0198082 A1 discloses a method which includes attempting to communicate with a printer in a network via a first network communications protocol, determining if the communication with the printer is successful via the first network communications protocol and automatically communicating with the printer via a second network communications protocol if communication via the first network communications protocol the printer is unsuccessful.

### SUMMARY

In accordance with the invention, there is provided: a method for automating network management tasks as recited by claim 1; a system as recited by claim 14; and a computer readable medium as recited by claim 15.

### BRIEF DESCRIPTION OF THE DRAWINGS

The accompanying drawings, which constitute a part of this specification, illustrate several embodiments and, together with the description, serve to explain the disclosed principles.
Fig. 1 is a block diagram of an exemplary network management system, according to some embodiments of the present disclosure.
Fig. 2 shows an exemplary functional structure of a Qapp, according to some embodiments of the present disclosure.
Fig. 3 shows an exemplary Qapp execution flow, according to some embodiments of the present disclosure.
Fig. 4 shows an exemplary canvas, according to some embodiments of the present disclosure.
Fig. 5 shows an exemplary canvas for performing neighbor check, according to some embodiments of the present disclosure.
Fig. 6 shows an exemplary canvas for performing path analysis, according to some embodiments of the present disclosure.
Fig. 7 is a flow chart of an exemplary method of creating a Qapp, according to some embodiments of the present disclosure.
Fig. 8 is a flow chart of an exemplary method of executing a Qapp, according to some embodiments of the present disclosure.

### DETAILED DESCRIPTION

The present application discloses a visual network programming method and system to further improve flexibility and customizability in network management automation. For example, the disclosed method and system enable a network professional to create or customize network applications for various types of network management tasks via Graphical User Interface (GUI) with little or no need of writing scripts.

One aspect of the present disclosure involves a method, implemented by a processor device, for providing a visual network programming interface (e.g., a GUI) and platform to enable a user with even limited or no programming experience to create a network application to automate network management tasks associated with a computer network. With the interface, the network application can be defined using an execution flow containing a set of graphical icons. Different graphical icons can be associated with different types of functions, operations, or input/output (l/O) data. For example, graphical icons may include one or more of device queues, device selectors, commands, tables, table operations, or outputs. Various operations associated with the graphical icons will be discussed in greater detail in other passages of this disclosure. Different types of network tasks can be automated by using different types of execution flows. For example, a network application can be defined to include a device queue as input. The device queue may include a set of network devices and/or a set of neighboring network devices. Information of the network devices and/or their neighboring network devices in the device queue can be automatically obtained when the network application is executed. The device queue can also include a network traffic path. In this case, information of network devices and interfaces along the network traffic path can be automatically discovered and obtained when the network application is executed. A set of network commands can be defined to be executed by each network device in the device queue. Different sets of commands can be customized for different types of network devices. When the network application is executed, the network application can provide mechanism to determine which set of commands is to be used according to the type of network device for each network device in the device queue. A suitable set of network commands may then be used to retrieve information from the corresponding network device. A parser can be defined to parse the output or result of each command. The parsed data may be stored in a tabular format and used in various output operations. For example, the parsed data may be used to display information on a map, compare data against a threshold value, create an alert, and/or export data to a file. After a network application is defined, the network application can be saved and/or complied to generate an executable network application.

A further aspect of the present disclosure involves a method, implemented by a processor device, for executing a network application to automate network management tasks associated with a computer network. The method may include retrieving a device queue including a plurality of network devices of the computer network. The method may also include extracting topological information associated with the plurality of network devices in the device queue. For each network device in the device queue, the method may include executing a network command customized for that network device based on a type of the network device and performing an execution flow associated with the network device based on the network command and the topological information. Performing the execution flow may include performing data analysis on output resulting from the execution of the network command according to an analysis flow. The analysis flow may be customized or defined by a user.

The plurality of network devices may be from different vendors. The plurality of network devices may form a network traffic path. The topological information may include connection information of the plurality of network devices along the network traffic path.

The method may further comprise processing execution results of at least two execution flows, wherein the at least two execution flows are associated with neighboring network devices. Processing execution results of the at least two execution flows may comprise comparing the execution results of the at least two execution flows to determine whether a network configuration or parameter (such as the duplex or speed) matches between the neighboring network devices. In an example, processing execution results of the at least two execution flows may comprise comparing the execution results of the at least two execution flows to determine whether a duplex mismatch occurs.

The method may further comprise generating a network application for performing said method by: providing a graphical user interface for programming a network application to automate network management tasks associated with the computer network; obtaining, through the graphical user interface, a device queue including the plurality of network devices; identifying, by the processor device, topological information associated with the plurality of network devices in the device queue; for each network device in the device queue, providing a customized network command executable by the network device based on a type of the network device; receiving, through the graphical user interface, an execution flow including one or more graphical icons, each of the one or more graphical icons being associated with one or a set of corresponding functions or operations; associating, by the processor device, the execution flow with at least one of the network devices in the device queue based on the topological information and the corresponding customized network command; and generating, by the processor device, the network application based on the device queue and the execution flow, the network application including instructions for executing the corresponding customized command and performing the execution flow for the at least one of the network devices in the device queue.

The method of generating a network application may also be provided independently. Thus, a further aspect of the present disclosure involves a method, implemented by a processor device, for providing a visual network programming platform. The method may include providing a GUI for programming a network application to automate network management tasks associated with a computer network. The method may also include obtaining, through the GUI, a device queue including a plurality of network devices in the computer network. The method may further include identifying topological information associated with the plurality of network devices in the device queue. For each network device in the device queue, the method may include providing a customized network command executable by the network device based on a type of the network device. The method may also include receiving, through the GUI, an execution flow including one or more graphical icons. Each of the one or more graphical icons may be associated with one or a set of corresponding functions or operations. The method may also include associating the execution flow with at least one of the network devices in the device queue based on the topological information and the corresponding customized network command. The method may also include generating the network application based on the device queue and the execution flow. The network application may include instructions for executing the corresponding customized command and performing the execution flow for the at least one of the network devices in the device queue.

The method may further comprise obtaining the device queue by receiving, through the graphical user interface, information provided by a user. Alternatively or additionally, the method may further comprise obtaining the device queue by importing, through the graphical user interface, information from a digital file.

The method may further comprise: receiving, through the graphical user interface, information of a seed network device; and obtaining the device queue by automatically discovering neighboring network devices of the seed network device, the neighboring network devices being physically or logically connected to the seed network device.

The customized network command may be a Command-Line Interface (CLI) command and the type of the network device includes vendor information of the network device.

The method may further comprise: receiving a first branch of the execution flow; associating the first branch of the execution flow with a first network device in the device queue; receiving a second branch of the execution flow; associating the second branch of the execution flow with a second network device in the device queue; and combining the first and second branches of the execution flow to compare execution results. The first and second network devices may be neighboring devices.

The plurality of network devices may be from different vendors. The topological information may include connection information between at least two of the plurality of network devices. The plurality of network devices may form a network traffic path and the topological information includes connection information of the plurality of network devices along the network traffic path.

Another aspect of the present disclosure involves a system for providing a visual network programming interface and platform to enable a user with even limited or no programming experience to create a network application to automate network management tasks associated with a computer network. The system may include a memory device storing computer codes for achieving network management task automation. The system may also include a processor device operatively coupled to the memory device. The computer codes stored on the memory device, when executed by the processor device, may cause the processor device to perform various operations, including receiving input from a user to define the network application and generating executable codes of the network application based on the definition. With this system, the application can be defined using an execution flow containing a set of graphical icons. Different graphical icons can be associated with different types of functions, operations, or I/O data. For example, graphical icons may include one or more of device queues, device selectors, commands, tables, table operations, or outputs. Different types of network tasks can be automated by using different types of execution flows. For example, a network application can be defined to include a device queue as input. The device queue may include a set of network devices and/or a set of neighboring network devices. Information of the network devices and/or their neighboring network devices in the device queue can be automatically obtained when the network application is executed. The device queue can also include a network traffic path. In this case, information of network devices and interfaces along the network traffic path can be automatically discovered and obtained when the network application is executed. A set of network commands can be defined to be executed by each network device in the device queue. Different sets of commands can be customized for different types of network devices. When the network application is executed, the system can determine which set of commands is to be used according to the type of network device for each network device in the device queue. A suitable set of network commands may then be used to retrieve information from the corresponding network device. A parser can be defined to parse the output or result of each command. The parsed data may be stored in a tabular format and used in various output operations. For example, the parsed data may be used to display information on a map, compare data against a threshold value, create an alert, and/or export data to a file. After a network application is defined, the network application can be saved and/or complied to generate an executable network application.

A further aspect of the present disclosure involves a method, implemented by a processor device, for generating a network application, the method comprising: obtaining a device queue including a plurality of network devices in the computer network; identifying, by the processor device, topological information associated with the plurality of network devices in the device queue; for each network device in the device queue, providing a customized network command executable by the network device based on a type of the network device; receiving an execution flow; associating, by the processor device, the execution flow with at least one of the network devices in the device queue based on the topological information and the corresponding customized network command; and generating, by the processor device, a network application based on the device queue and the execution flow, the network application including instructions for executing the corresponding customized command and performing the execution flow for the at least one of the network devices in the device queue.

A further aspect of the present disclosure involves a system for executing a network application. The system may include a memory device storing computer codes for automating network management tasks associated with a computer network. The system may also include a processor device operatively coupled to the memory device. The computer codes stored on the memory device, when executed by the processor device, may cause the processor device to perform various operations. The operations may include retrieving a device queue including a plurality of network devices of the computer network. The operations may also include extracting topological information associated with the plurality of network devices in the device queue. For each network device in the device queue, the operations may include executing a network command customized for that network device based on a type of the network device and performing an execution flow associated with the network device based on the network command and the topological information. Performing the execution flow may include performing data analysis on output resulting from the execution of the network command according to an analysis flow. The analysis flow may be customized or defined by a user.

The operations may further comprise generating a network application.

A system for generating a network application may also be provided independently. Thus, another aspect of the present disclosure involves a system for providing visual network programming. The system may include a memory device storing computer codes for automating network management tasks associated with a computer network. The system may also include a processor device operatively coupled to the memory device. The computer codes stored on the memory device, when executed by the processor device, may cause the processor device to perform various operations. The operations may include providing a GUI and obtaining, through the GUI, a device queue including a plurality of network devices in the computer network. The operations may also include identifying topological information associated with the plurality of network devices in the device queue. For each network device in the device queue, the operations may include providing a customized network command executable by the network device based on a type of the network device. The operations may also include receiving, through the GUI, an execution flow including one or more graphical icons. Each of the one or more graphical icons may be associated with one or a set of corresponding functions or operations. The operations may also include associating the execution flow with at least one of the network devices in the device queue based on the topological information and the corresponding customized network command. The operations may also include generating a network application based on the device queue and the execution flow. The network application may include instructions for executing the corresponding customized command and performing the execution flow for the at least one of the network devices in the device queue.

A further aspect of the present disclosure involves a computer readable medium comprising instructions stored thereon, which when executed by one or more processors cause the processors to perform any of the foregoing methods.

Additional objects and advantages of the present disclosure will be set forth in part in the following detailed description, and in part will be obvious from the description, or may be learned by practice of the present disclosure. The objects and advantages of the present disclosure will be realized and attained by means of the elements and combinations particularly pointed out in the appended claims.

It is to be understood that the foregoing general description and the following detailed description are exemplary and explanatory only, and are not restrictive of the invention, as claimed.

Reference will now be made in detail to exemplary embodiments of the invention, examples of which are illustrated in the accompanying drawings. When appropriate, the same reference numbers are used throughout the drawings to refer to the same or like parts.

Embodiments consistent with the present disclosure involve system and method for automating network management tasks. Exemplary network management tasks may include network neighbor check (e.g., interface speed/duplex matching), data traffic path analysis (e.g., quality of service check along the path), inventory report, network performance monitoring, network troubleshooting, network mapping, or other tasks. Automating a network management task may refer to a process in which one or more steps of the network management task are automatically conducted by at least one processor device, such as a CPU of a network management station. A network management station may include a dedicated hardware computer device specifically designed for management of computer networks. Alternatively or additionally, a network management station may include a general purpose computer equipped with network management software. Automating network management tasks may be accomplished using one or more network management applications (also referred to as network applications), which may include software instructions (also referred to as instructions, software codes, or codes) to be executed by one or more processor devices (e.g., a CPU of a network management station) to automatically perform one or more steps of a network management task. For convenience of description, a network management application is also referred to herein as a Qapp, although such an application can have other names.

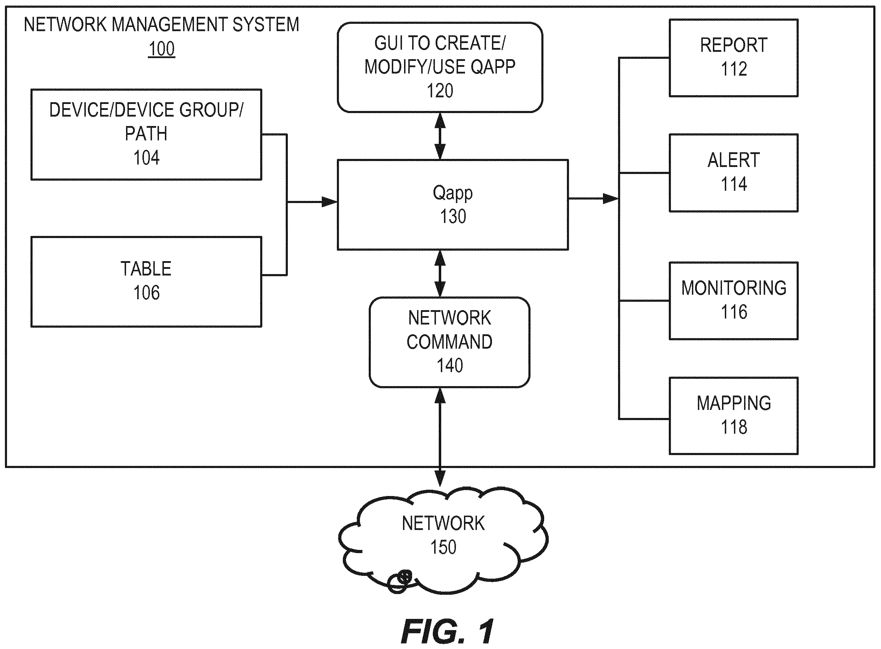

Fig. 1 is a block diagram of an exemplary network management system 100, consistent with some embodiments disclosed in the present application. System 100 may be implemented by one or more network management stations, as described above. System 100 may provide a GUI 120 to interact with a user of the system. For example, system 100 may include a display device (not shown in Fig. 1) to display GUI 120. System 100 may also include one or more input devices (not shown in Fig. 1), such as a keyboard, a mouse device, a scanner, a camera, a mic, etc. to receive information from the user. The user of system 100 may create, modify, and/or execute one or more Qapps, such as Qapp 130, through GUI 120. Qapp 130 may be created by defining an execution flow including a set of ordered graphic icons (also referred to as visual blocks or graphic indicators) to facilitate efficient network programing. After Qapp 130 is created and saved, it can be compiled into executable software codes to perform various network management tasks. System 100 may include one or more processor devices (not shown in Fig. 1), one or more memory devices (not shown in Fig. 1), and other computer devices to execute Qapp 130.

Qapp 130 may receive various input information. For example, Qapp 130 may receive device related information 104, such as information of a single device, a device group, or a network data traffic path (also referred to as traffic path, application path, or path) consisting of a plurality of devices. As used herein, a device refers to a network device that is part of a computer network, such as a switch, a router, a hub, a bridge, a router, a brouter (a combined bridge and router), a gateway, or a firewall, etc. Device related information 104 may be preset and loaded into Qapp 130, input by a user, automatically generated through a discovery process, dynamically determined based on a network map on which Qapp 130 is running, or through other suitable means. Qapp 130 may also receive table data 106, including any data in a tabular format. For example, table data 106 may be in the form of a CSV file, a TXT file, an XLS file, or other types of digital files having a tabular format. Table data 106 may be preset and loaded into Qapp 130, imported from a digital file into Qapp 130, input by a user, generated by another Qapp, or through other suitable means. Device related information 104 and/or table data 106 may also be modified during runtime of Qapp 130.

Qapp 130 may interact with a network 150 to retrieve information using various network commands 140. For example, network 150 may include a plurality of network devices, which may be at different network levels (e.g., Level 2, Level 3, etc.), made by different vendors (e.g., Cisco, Juniper, etc.), and operate under different software. Qapp 130 may retrieve information from the network devices using network commands customized to these network devices. Different sets of commands may be executed for different types of network devices. The commands may include CLI commands, SNMP commands, or API calls. In this way, Qapp 130 may act as a universal network management tool applicable to any network regardless of the underlying structure and composition of the network. The retrieved information may be analyzed and processed by one or more operation logics of Qapp 130 to generate desirable output information.

The output information of Qapp 130 may be in various forms and be used in many ways. For example, Fig. 1 shows some exemplary outputs, such as report 112, alert 114, monitoring information 116, and mapping data 118. Report 112 may include a data file, a display, or a printout of a report containing data in a particular format. Alert 114 may include a message, a visual indicator (e.g., a pop up, an icon, an animation, etc.), a change of display (e.g., a highlight, a blink, a change of color, etc.), or other forms of alerts. Monitoring information 116 may include a periodically updated network parameter or other data for monitoring the performance or status of the network or network components (network devices, interfaces, links, etc.). Mapping data 118 may include topological information, e.g., connection information and network design data such as routing protocol(s) and interface(s) configured for the device.

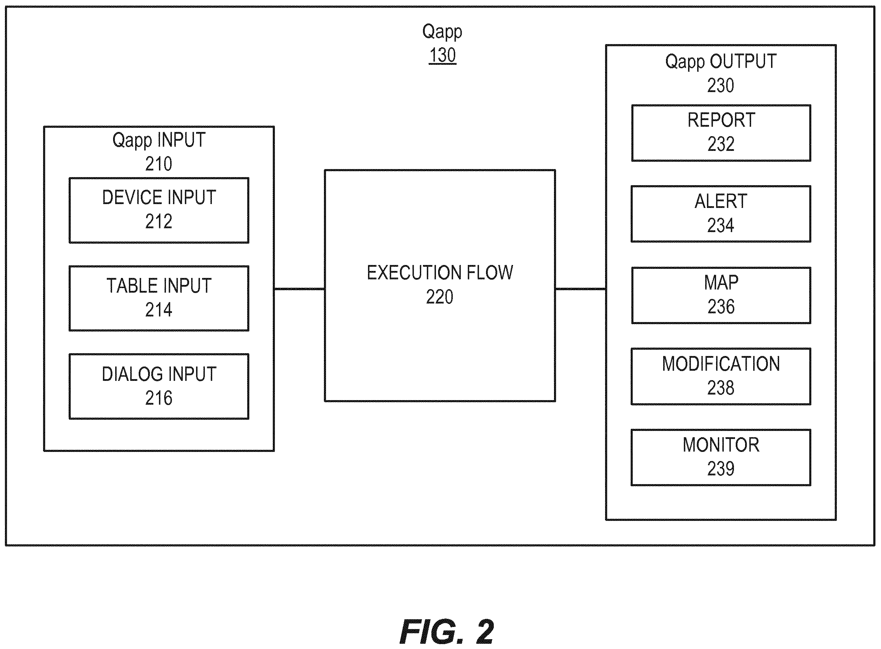

Qapp 130 may include one or more functional components. For example, Fig. 2 shows an exemplary functional structure of Qapp 130. As shown in Fig. 2, Qapp 130 may include a Qapp input 210, an execution flow 220, and a Qapp output 230. Qapp input 210 may include a device input portion 212 for receiving device related information 104 such as device, device group, or path. Input 210 may also include a table input portion 214 for receiving table data 106. Input 210 may also include a dialog input portion 216 to receive user input information from one or more dialogs or other user interaction means. Qapp output 230 may include a report portion 232 for outputting reports (e.g., CSV files, XLS files, etc.), an alert portion 234 for outputting alerts (e.g., messages, visual indicators, changes of display, etc.), a map portion 236 for outputting mapping information, a modification portion 238 for outputting modification information such as device property modification, topology modification, etc., and a monitor portion 239 for outputting monitoring data.

Qapp 130 may include an execution flow 220. Execution flow 220 may include a series of operations to process input data and generate output data. Execution flow 220 may include control blocks such as If and Loop blocks, dialogs, and canvases. The term canvas, as used herein, refers to an execution unit capable of performing a set of operations to its input to generate an output. In other words, each canvas may perform a specific function or a set of functions.

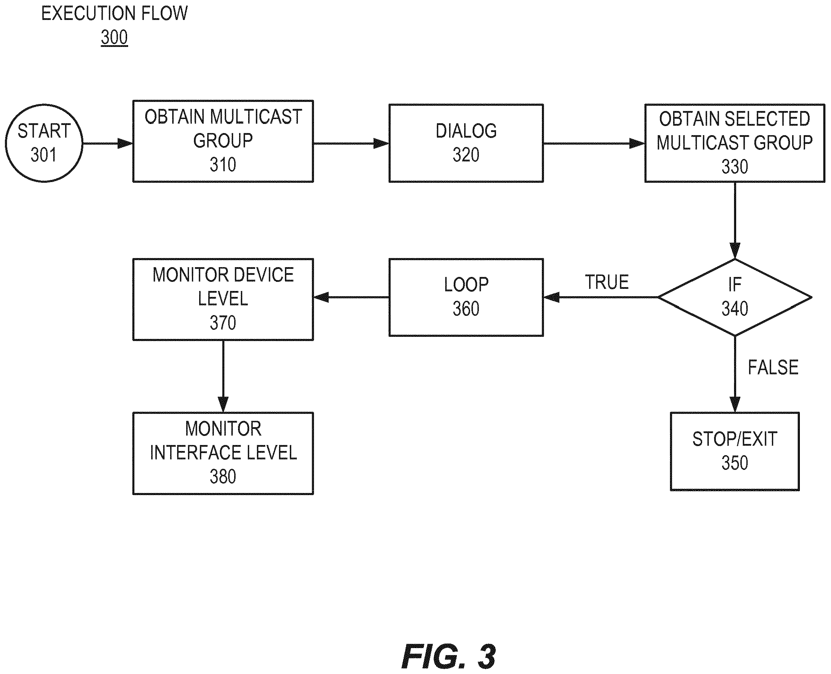

Fig. 3 shows an exemplary Qapp execution flow 300 including a plurality of canvases and other types of nodes. Execution flow 300 may be used to obtain one or more multicast groups from network devices and monitor the status of a certain multicast group. Execution flow 300 includes a flow of operations starting from a start node 301. The flow continues to the first canvas node 310. Canvas node 310 may be used to obtain all multicast groups configured in the network devices. The flow then enters into a dialog node 320, in which the obtained multicast groups can be listed to allow a user to select a group. The selection information can then be passed on to a canvas node 330. Based on the selection information, canvas node 330 can retrieve information of the selected group. The flow then continues to a condition node 340 (also referred to as a "IF" node). Condition node 340 may evaluate the input information from canvas node 330. For example, condition node 340 may evaluate whether the multicast group selected by the user (e.g., selected by the user at dialog node 320) is valid. The flow is then forked into two branches. If the condition is not satisfied (e.g., the multicast group selected by the user is not valid), the flow proceeds to a stop node 350, exiting execution flow 300. Otherwise the flow proceeds to a loop node 360 followed by two canvas nodes 370 and 380. Canvas node 370 may be used to monitor device level data and canvas node 380 may be used to monitor interface level data. Loop node 360 may include a frequency parameter, such as every 2 minutes, indicating the looping frequency. All nodes following loop node 360 may be executed repeatedly according to this frequency parameter. For example, canvas nodes 370 and 380 may be executed every 2 minutes during execution of flow 300.

As described above, a canvas is an execution unit to perform a specific function or a set of functions. For example, a common type of canvas may be used to retrieve data from one or more network devices and perform data analysis. A canvas may achieve its functionality using a flow of operations similar to execution flow 300. As used herein, the term execution flow may refer to any flow of execution or operation that processes input data and generate output data. In the context of a Qapp, an execution flow may include a series of canvases and other types of nodes. In the context of a canvas, an execution flow may include a series of functional blocks, usually represented as a flow of graphical icons, that collectively perform the specific function or set of functions associated with the canvas.

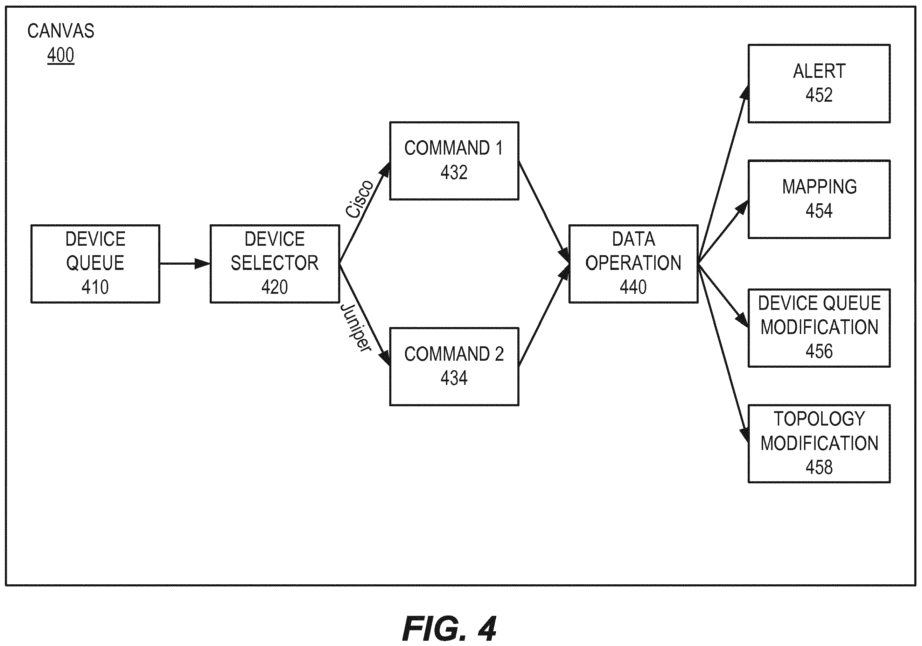

Fig. 4 shows an exemplary canvas 400. Canvas 400 includes a flow containing a set of ordered graph icons. Each type of graph icon of this flow may be associated with a certain type of functions, operations, or data input/output. For example, a device queue 410 may indicate one or more devices from which data acquisition may be conducted. In some embodiments, the device(s) in device queue 410 may be organized in a tabular format. For example, a device column may be used to list all device(s) (e.g., identifier(s) of the device(s)) in the device queue. Additional columns may be added to list other information relating to the device(s), such as interface(s), IP address(es), data rate(s), etc. Each row may include information of only one device, while a single device may occupy multiple rows to accommodate related information. For example, a device may include multiple interfaces and each interface may have its own data rate. Therefore, each interface of the device may occupy a separate row. The column/row arrangement described above is for exemplary purposes only. Other data organization methods may also be used to store device related information.

Table 1 shows an exemplary device queue that includes a single device R1 (e.g., "this" device) and its interfaces (s0/0, s0/1, e0/0, and e0/1). Table 2 shows another exemplary device queue that includes neighboring device pairs. For example, the header of Table 2 indicates "this" device, the interface of "this" device, "neighbor" device, and the interface of the "neighbor" device. The first row of Table 2 indicates that device R1 are R2 are neighboring devices and they are connected to each other through their corresponding interfaces s0/0 (R1's interface) and s0/0 (R2's interface). The other rows of Table 2 indicate similar information. The neighboring devices may be L1, L2, or L3 neighbors. In some embodiments, a device pair may not be neighbors and the pair may be referred to as "this" device and "other" device. Table 3 shows an exemplary device queue that includes a device group. The device group may include a plurality of devices (R1, R2, R3, ...) and their interfaces (s0/0, s0/1, e0/0, etc.). Table 4 shows another exemplary device queue that includes only the devices without their interfaces.

**Table 1**

| this | this_intf |
|---|---|
| R1 | s0/0 |
| R1 | s0/1 |
| R1 | e0/0 |
| R1 | e0/1 |

**Table 2**

| this | this_intf | nbr | nbr_intf |
|---|---|---|---|
| R1 | s0/0 | R2 | s0/0 |
| R1 | e0/0 | R3 | e0/0 |
| R1 | s0/1 | R4 | s0/0 |

**Table 3**

| this | this_intf |
|---|---|
| R1 | s0/0 |
| R1 | s0/1 |
| R1 | e0/0 |
| R1 | e0/1 |
| R2 | s0/0 |
| R2 | s0/1 |
| R2 | e0/0 |
| R3 | s0/0 |
| ... | |

**Table 4**

| this | this_intf |
|---|---|
| R1 | |
| R2 | |
| R3 | |
| R4 | |

Device queue 410 may be used to control a looping operation of canvas 400. For example, each row in device queue 410 may be used as an input to initiate a series of operations defined by other components of canvas 400. After the operations based on one row finishes, the next row may be used to initiate another round of operations until all rows in device queue 410 are traversed.

In some embodiments, device queue 410 may be obtained by receiving information provided by a user. For example, the user may input device queue information through GUI120. In some embodiments, device queue 410 may be obtained by importing information from a digital file. For example, device queue information may be stored in a CSV file and may be imported, e.g., through GUI 120, into canvas 400. Device queue 410 can be dynamically modified. For example, a canvas can be created to discover a network. An initial device queue may contain information of a seed network device, such as its IP address or other types of identifier. System 100 may then perform an auto discovery process to automatically discover neighboring network devices of the seed network device. The neighboring network devices may be physically or logically connected to the seed network device. For example, the neighboring network devices may be Level 3 neighbors of the seed device. In another example, the neighboring network devices may be Level 2 neighbors of the seed device. The auto discovery process may discover the first level neighbors of the seed device, where the discovered neighbors are immediately connected to (logically or physically) the seed device. The auto discovery process may further discover additional levels of the neighbors, e.g., the neighbors of the first level neighbors. In this way, any portion or the entirety of the network connected to the seed device may be discovered. The collection of the discovered network devices, or any subset thereof, may be used as information of device queue 410.

Device queue 410 may contain topological information associated with the devices in the device queue. For example, as shown in Table 2 above, device queue 410 may include two columns, containing information of a device and its neighbors. In some embodiments, one device in the device queue may be identified as "this" device. "This" device's neighbor may be identified as "neighbor" or "nbr" device. Connected interfaces or other types of information can also be included in device queue 410 as additional columns. In some embodiments, devices in device queue 410 may form a network traffic path. In this case, once a device is identified as "this" device, the device immediately prior to "this" device in the path may be identified as "previous" or "prev" device, while the device immediately following "this" device in the path may be identified as "next" device. While these exemplary topological identifiers are intuitive, other identifiers may also be used to indicate the connection information between a pair of devices. In some embodiments, when a Qapp is executed, neighboring devices or devices along an application path can be automatically discovered and information of the discovered devices can be automatically ported into device queue 410.

Referring to Fig. 4, canvas 400 may include a device selector 420. Device selector 420 may follow device queue 410 in the execution flow defined in canvas 400. Device selector 420 may be used to provide a customized network command to the device currently in the execution flow based on the type of the device, such that the command is executable by the device and suitable for retrieving information from the device. The type of the device may include the vendor information of the device. As used herein, a vendor may refer to a manufacturer or technology provider of the device. For example, devices in device queue may be made by or built according to the technology of Cisco, Juniper, etc. Devices from different vendors may generally be considered as of different types. In some cases, devices from the same manufacturer or technology provider may still be considered as of different types when, for example, the devices are made according to different technology generations, the devices are of different models, or the devices operate under different kinds, versions, or updated levels of software. Device selector 420 may differentiate devices of different types based on, for example, reading device property information such as hostname, device type, vendor model, etc. and comparing the information against a database. Based on the device type information, device selector 420 may divert the execution flow to one of the command blocks 432, 434, to provide a customized network command executable by the device. For example, the customized network command may be a Command-Line Interface (CLI) command. As different vendors may implement different CLI command set specific for the vendor's own devices, a CLI command executable by vendor A's devices may not be executable by vendor B's devices. Device selector 420 may bridge the gap created by the non-uniform CLI command sets and provide branched command options customized for a specific type of device listed in the device queue. Execution flow of canvas 400 may proceed to the appropriate branch based on the device type determination made by device selector 420. As an example, Fig. 4 shows that when the device is a Cisco device, device selector 420 branches the flow to command block 432, which provides a Cisco CLI command for retrieving information from the device. When the device is a Juniper device, device selector 420 branches the flow to command block 434, which provides a Juniper CLI command for retrieving information from the device.

Once the proper command is selected, data acquisition may be performed using the command to retrieve information from the device. In some embodiments, information may be retrieved using a sample-driven approach, in which the execution result of the command is analyzed and parsed based on customizable or user definable variables. The retrieved information may be processed by data operation block 440.

Data operation block 440 may include operation logics for data manipulation. For example, as the execution flow defined by canvas 400 loops for each row of device queue 410, operation result of each individual row (e.g., information retrieved from the underlying device or interface corresponding to the row) may be saved individually after each loop. Each individual operation result may be processed and/or analyzed. After all rows are traversed, operation results individually saved, processed, or analyzed may be combined, compared, or further processed or analyzed together.

Data processed by data operation block 440 may be output in various forms. For example, the data may be used by alert block 452 to trigger an alert, by mapping block 454 to generate a map or map components, by device queue modification block 456 to modify device queue 410, or by topology modification block 458 to modify the topological information. The data may also be used as an input to another canvas, or be exported as digital files or reports.

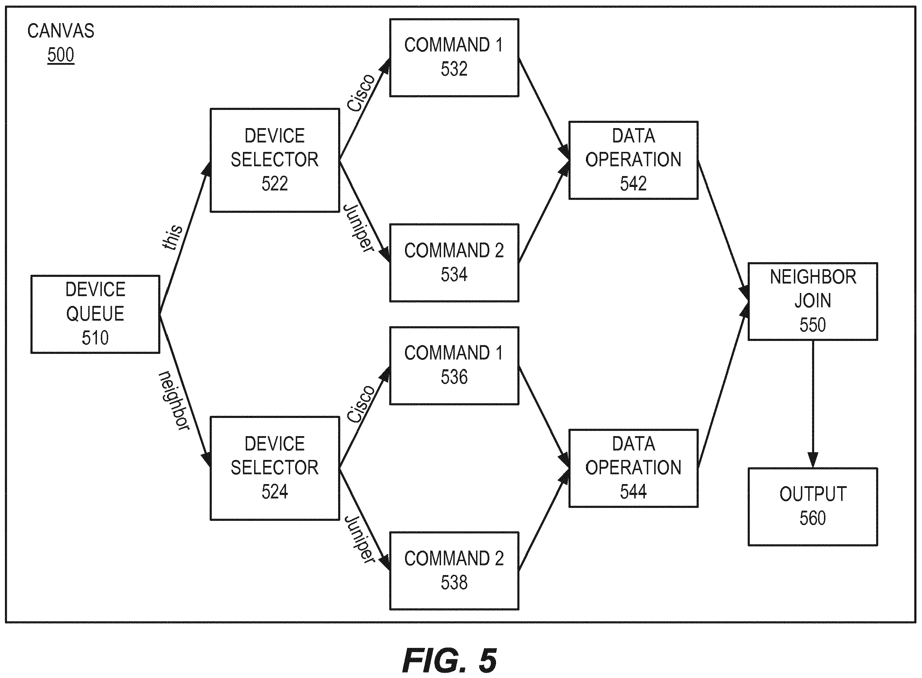

Fig. 5 shows another exemplary canvas 500. Canvas 500 may be used to perform neighbor check such as duplex mismatch check. Canvas 500 may include a device queue 510, which may contain at least two neighboring devices: a "this" device and a "neighbor" device. These two devices may be handled by two device selectors: device selector 522 for "this" device and device selector 524 for "neighbor" device. Each device selector leads to a separate branch. For example, a branch of "this" device proceeds along device selector 522, command nodes 532, 534 (similar to command nodes 432, 434), and data operation block 542, whereas the execution flow of "neighbor" device proceeds along device selector 524, command branches 536, 538 (similar to command branches 432, 434), and data operation block 544. In canvas 500, device selectors 522, 524 not only function as device type differentiators, but also function as topological differentiators. Data operation block 542 may be used to store or process information retrieved from "this" device. Similarly, data operation block 544 may be used to store or process information retrieved from "neighbor" device. Once the flow proceeds through both the upper flow (for "this" device) and the lower flow (for "neighbor" device), the two branches join together at neighbor join block 550, where the data for individual device stored or processed in blocks 542 and 544 are jointly processed. The data from individual data operation blocks may be combined, compared, and/or further processed. The resulting data can be output to output block 560. An exemplary flow of canvas 500 may be as follows:
510 ("this") -> 522 -> 532/534 -> 542 -> 510 ("neighbor") -> 524 -> 536/538 -> 544 -> 550 -> 560.

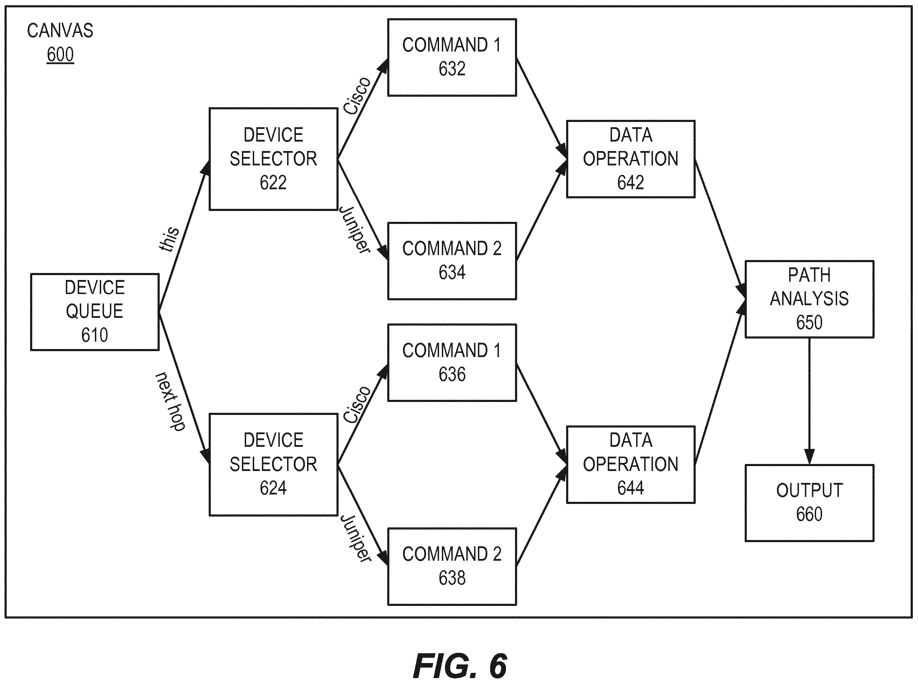

Fig. 6 shows yet another exemplary canvas 600. Canvas 600 may be used to perform traffic path analysis. Canvas 600 may include a device queue 610, which may contain at least two devices along a traffic path: a "this" device and a "next hop" device. The "next hop" device may be a device downstream along the traffic path relative to "this" device. Similar to canvas 500, in canvas 600 these two devices along the traffic path may be handled by two device selectors, respectively: device selector 622 for "this" device and device selector 624 for "next hop" device. Each device selector leads to a separate execution branch. For example, a branch of "this" device proceeds along device selector 622, command nodes 632, 634 (similar to command nodes 432, 434), and data operation block 642 (similar to data operation block 542), whereas a branch of "next hop" device proceeds along device selector 624, command nodes 636, 638 (similar to command nodes 432, 434), and data operation block 644 (similar to data operation block 544). Once the flow proceeds through both the upper branch (for "this" device) and the lower branch (for "next hop" device), the two flows join together at path analysis block 650, where the data for individual device stored or processed in blocks 642 and 644 are jointly analyzed. The data from individual data operation blocks may be combined, compared, and/or further processed. The resulting data can be output to output block 660. An exemplary flow of canvas 600 may be as follows:
610 ("this") -> 622 -> 632/634 -> 642 -> 610 ("neighbor") -> 624 -> 636/638 -> 644 -> 650 -> 660.

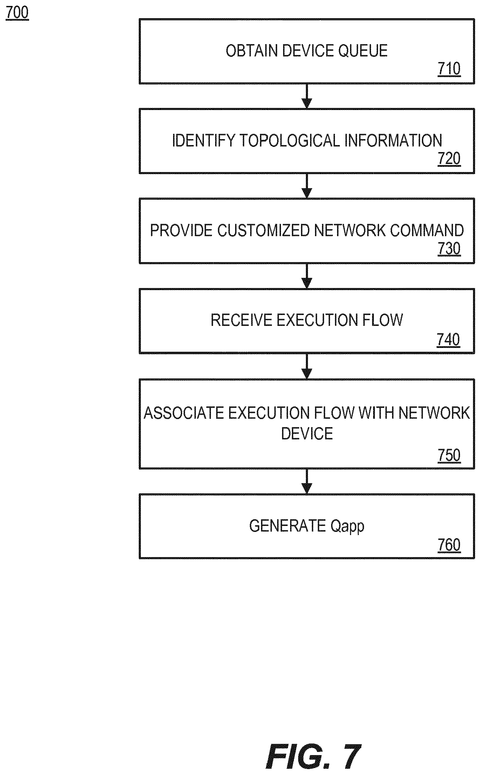

Fig. 7 is a flow chart of an exemplary method 700 for creating a Qapp. Method 700 includes a plurality of steps, some of which may be optional. In step 710, system 100 may obtain a device queue (e.g., device queue 410/510/610) through GUI 120. For example, system 100 may obtain the device queue through user input, digital file importing, or automatic discovery. In step 720, system 100 may identify topological information associated with the devices in the device queue. For example, topological information may be identified by marking each device with identifier such as "this", "neighbor", "next", etc. In step 730, system 100 may provide, for each device in the device queue, a customized network command executable by the device based on a type of the device. For example, device selector 420/522/524/622/624 may be used to differentiate different types (e.g., different vendors, different models, etc.) of devices and provide a customized command based on the device type information. In step 740, system 100 may receive an execution flow including one or more graphical icons. Exemplary execution flows include those shown in Figs. 3-6. Each graphical icon may be associated with one or a set of functions, operations, I/O data, etc. For example, in GUI 120, individual function blocks, such as device queue 410/510/610, device selector 420/522/524/622/624, or other blocks, are represented as graphical icons. A user may drag/drop individual graphical icons, set parameters, make connections, and execute the resulting Qapp using GUI 120. System 100 may receive one or more graphical icons (e.g., device queue, device selector, etc.) deployed by the user through GUI 120 to form an execution flow. In step 750, system 100 may associate the execution flow with the device(s) in the device queue based on topological information (e.g., this/neighbor, this/next, etc.) and customized network command executable by the device(s) (e.g., appropriate command branch based on device type). For example, system 100 may associate the execution flow formed by graphical icons 510, 522, 532, 534, and 542 with "this" device in Fig. 5. In step 760, system 100 may generate a Qapp based on the device queue and the execution flow defined by the graphical icons. The generated Qapp may include executable codes for executing the customized network command on the corresponding device and performing the defined execution flow. System 100 may associate any set of graphical icons with a proper execution flow for performing one or a set of defined functions.

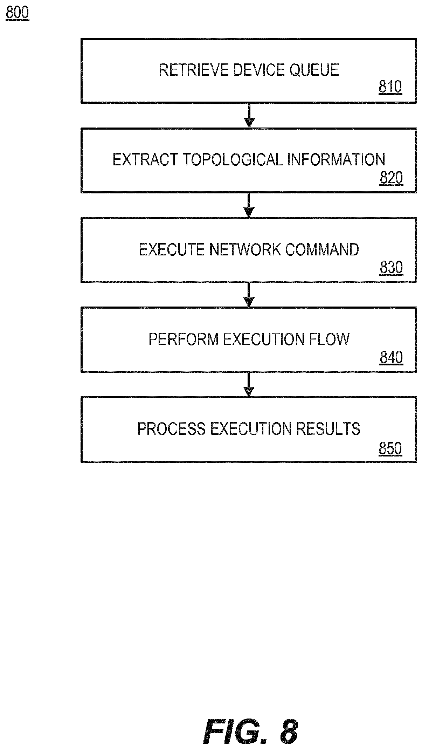

Fig. 8 is a flow chart of an exemplary method 800 for executing a Qapp. In step 810, system 100 may retrieve a device queue defined by the Qapp. For example, device information in the device queue may be retrieved by system 100 for sequentially traversing each device in the device queue. In step 820, system 100 may extract or discover topological or path information associated with the devices in the device queue. For example, the topological or path information may be extracted based on the topological indicators (e.g., "this", "neighbor", "next", etc.) associated with each individual device. In step 830, system 100 may execute a network command customized for each device (e.g., command from an appropriate command node) to retrieve information from that device. In step 840, system 100 may perform one or more execution flows defined by the Qapp. An execution flow may include performing analysis on data retrieved from step 830 with each device in the device queue. For example, the system may parse the retrieved data and save the results in a table. In step 850, system 100 may process execution results. For example, system 100 may combine data retrieved during each individual execution flow and jointly process the data. In some embodiments, system 100 may compare the duplex information between two neighboring devices to determine if there exists a mismatch.

The specification has described network management systems and methods. The illustrated steps are set out to explain the exemplary embodiments shown, and it should be anticipated that ongoing technological development will change the manner in which particular functions are performed. Thus, these examples are presented herein for purposes of illustration, and not limitation. For example, steps or processes disclosed herein are not limited to being performed in the order described, but may be performed in any order, and some steps may be omitted, consistent with disclosed embodiments. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

While examples and features of disclosed principles are described herein, modifications, adaptations, and other implementations are possible without departing from the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store computer code instructions for execution by one or more processors, including computer code instructions for causing the processor(s) to perform steps or stages consistent with the embodiments described herein. The term "computer-readable medium" should be understood to include tangible items and exclude carrier waves and transient signals, i.e., be non-transitory. Examples include RAM, ROM, volatile memory, nonvolatile memory, hard drives, CD ROMs, DVDs, flash drives, disks, and any other known physical storage media.

## Claims

1. A method, implemented by a network application executed by a processor device, for automating network management tasks associated with a computer network, the computer network comprising a plurality of network devices, the method comprising:
retrieving a device queue (510) including information of a plurality of network devices of the computer network in the device queue; and
for each network device in the device queue:
extracting topological information associated with the respective network device;
performing a first execution flow associated with the network device including executing a network command (532, 534) customized for the network device based on a type of the network device;
performing a second execution flow associated with another network device including executing a network command (536, 538) customized for the another network device based on a type of the another network device, wherein the another network device is determined as a neighbour device or a next hop device from the extracted topological information; and
processing (550) execution results of the first and second execution flows based on data retrieved (542, 544) from executing the respective network command on the network device and the another network device.

2. The method of claim 1, wherein when the another network device is determined as a next hop device, processing the execution results comprises performing traffic path analysis (650) for the network devices.

3. The method of claim 1, wherein:
when the another network device is determined as a neighbour device from the extracted topological information, processing the execution results comprises comparing the execution results of the first and second execution flows to determine (500) whether a network configuration or parameter matches between the neighboring network devices.

4. The method of any preceding claim, further comprising generating the network application by:
providing a graphical user interface for programming the network application;
obtaining (710), through the graphical user interface, the device queue (510);
identifying (720), by the processor device, the topological information;
for each network device in the device queue (510), providing (730) a customized network command executable by the network device based on the type of the network device;
receiving (740), through the graphical user interface, an execution flow for each network device, each execution flow including one or more graphical icons, each of the one or more graphical icons being associated with one or a set of corresponding functions or operations;
associating (750), by the processor device, the execution flow with at least one of the network devices in the device queue (510) based on the topological information and the corresponding customized network command; and
generating (760), by the processor device, the network application based on the device queue (510) and the execution flow.

5. The method of claim 4, further comprising:
obtaining (710) the device queue (510) by receiving, through the graphical user interface, information provided by a user.

6. The method of claim 4 or claim 5, further comprising:
obtaining (710) the device queue (510) by importing, through the graphical user interface, information from a digital file.

7. The method of any of claims 4 to 6, further comprising:
receiving, through the graphical user interface, information of a seed network device; and
obtaining (710) the device queue (510) by automatically discovering neighboring network devices of the seed network device, the neighboring network devices being physically or logically connected to the seed network device.

8. The method of any of claims 4 to 7, wherein the customized network command is a Command-Line Interface command and the type of the network device includes vendor information of the network device.

9. The method of any of claims 4 to 8, comprising:
receiving a first branch of the execution flow;
associating the first branch of the execution flow with a first network device in the device queue (510);
receiving a second branch of the execution flow;
associating the second branch of the execution flow with a second network device in the device queue (510); and
combining the first and second branches of the execution flow to compare execution results.

10. The method of claim 9, wherein the first and second network devices are neighboring devices.

11. The method of any of the preceding claims, wherein the plurality of network devices are from different vendors.

12. The method of any of the preceding claims, wherein the topological information includes connection information between at least two of the plurality of network devices.

13. The method of any of the preceding claims, wherein the plurality of network devices forms a network traffic path and the topological information includes connection information of the plurality of network devices along the network traffic path.

14. A system comprising:
a memory device storing computer codes for automating network management tasks associated with a computer network; and
a processor device operatively coupled to the memory device, wherein the computer codes stored on the memory device, when executed by the processor device, cause the processor device to perform the method of any preceding claim.

15. A computer readable medium comprising instructions stored thereon, which when executed by one or more processors, cause the one or more processors to perform the method of any of claims 1 to 13.

## Patentansprüche

1. Verfahren, implementiert durch eine Netzwerkanwendung, die von einer Prozessorvorrichtung ausgeführt wird, zum Automatisieren von mit einem Computernetzwerk assoziierten Netzwerkverwaltungsaufgaben, wobei das Computernetzwerk eine Vielzahl von Netzwerkvorrichtungen umfasst, wobei das Verfahren umfasst:
Abrufen einer Vorrichtungswarteschlange (510) einschließlich einer Information einer Vielzahl von Netzwerkvorrichtungen des Computernetzwerks in der Vorrichtungswarteschlange; und
für jede Netzwerkvorrichtung in der Vorrichtungswarteschlange:
Extrahieren einer topologischen Information, die mit der entsprechenden Netzwerkvorrichtung assoziiert ist;
Durchführen eines ersten Ausführungsflusses, der mit der Netzwerkvorrichtung assoziiert ist, einschließlich eines Ausführens eines Netzwerkbefehls (532, 534), der basierend auf einem Typ der Netzwerkvorrichtung für die Netzwerkvorrichtung angepasst ist;
Durchführen eines zweiten Ausführungsflusses, der mit einer weiteren Netzwerkvorrichtung assoziiert ist, einschließlich eines Ausführens eines Netzwerkbefehls (536, 538), der basierend auf einem Typ der weiteren Netzwerkvorrichtung für die weitere Netzwerkvorrichtung angepasst ist, wobei die weitere Netzwerkvorrichtung aus der extrahierten topologischen Information als eine Nachbarvorrichtung oder eine Next-Hop-Vorrichtung bestimmt ist; und
Verarbeiten (550) von Ausführungsergebnissen der ersten und zweiten Ausführungsflüsse basierend auf Daten, die aus einem Ausführen des entsprechenden Netzwerkbefehls auf der Netzwerkvorrichtung und der weiteren Netzwerkvorrichtung abgerufen (542, 544) werden.

2. Verfahren nach Anspruch 1, wobei
wenn die weitere Netzwerkvorrichtung als eine Next-Hop-Vorrichtung bestimmt ist, das Verarbeiten der Ausführungsergebnisse ein Durchführen einer Verkehrspfadanalyse (650) für die Netzwerkvorrichtungen umfasst.

3. Verfahren nach Anspruch 1, wobei:
wenn die weitere Netzwerkvorrichtung aus der extrahierten topologischen Information als eine Nachbarvorrichtung bestimmt ist, das Verarbeiten der Ausführungsergebnisse ein Vergleichen der Ausführungsergebnisse des ersten und des zweiten Ausführungsflusses umfasst, um zu bestimmen (500), ob eine Netzwerkkonfiguration oder ein Parameter zwischen den benachbarten Netzwerkvorrichtungen übereinstimmt.

4. Verfahren nach einem der vorstehenden Ansprüche, das weiter ein Generieren der Netzwerkanwendung umfasst, durch:
Bereitstellen einer grafischen Benutzeroberfläche zum Programmieren der Netzwerkanwendung;
Erhalten (710), durch die grafische Benutzeroberfläche, der Vorrichtungswarteschlange (510);
Identifizieren (720), durch die Prozessorvorrichtung, der topologischen Information;
für jede Netzwerkvorrichtung in der Vorrichtungswarteschlange (510), Bereitstellen (730) eines auf dem Typ der Netzwerkvorrichtung basierenden, durch die Netzwerkvorrichtung ausführbaren, angepassten Netzwerkbefehls;
Empfangen (740), durch die grafische Benutzeroberfläche, eines Ausführungsflusses für jede Netzwerkvorrichtung, wobei jeder Ausführungsfluss ein oder mehrere grafische Symbole einschließt, wobei jedes des einen oder der mehreren grafischen Symbole mit einer oder einem Satz von entsprechenden Funktionen oder Vorgängen assoziiert ist;
Assoziieren (750), durch die Prozessorvorrichtung, des Ausführungsflusses mit zumindest einer der Netzwerkvorrichtungen in der Vorrichtungswarteschlange (510) basierend auf der topologischen Information und dem entsprechenden angepassten Netzwerkbefehl; und
Generieren (760), durch die Prozessorvorrichtung, der Netzwerkanwendung basierend auf der Vorrichtungswarteschlange (510) und dem Ausführungsfluss.

5. Verfahren nach Anspruch 4, das weiter umfasst:
Erhalten (710) der Vorrichtungswarteschlange (510) durch Empfangen, durch die grafische Benutzeroberfläche, einer durch einen Benutzer bereitgestellten Information.

6. Verfahren nach Anspruch 4 oder Anspruch 5, das weiter umfasst:
Erhalten (710) der Vorrichtungswarteschlange (510) durch Importieren, durch die grafische Benutzeroberfläche, einer Information von einer digitalen Datei.

7. Verfahren nach einem der Ansprüche 4 bis 6, das weiter umfasst:
Empfangen, durch die grafische Benutzeroberfläche, einer Information einer Anfangsnetzwerkvorrichtung; und
Erhalten (710) der Vorrichtungswarteschlange (510) durch automatisches Entdecken von benachbarten Netzwerkvorrichtungen der Anfangsnetzwerkvorrichtung, wobei die benachbarten Netzwerkvorrichtungen physisch oder logisch mit der Anfangsnetzwerkvorrichtung verbunden sind.

8. Verfahren nach einem der Ansprüche 4 bis 7, wobei der angepasste Netzwerkbefehl ein Befehlszeile-Schnittstellenbefehl ist und der Typ der Netzwerkvorrichtung eine Verkäuferinformation der Netzwerkvorrichtung einschließt.

9. Verfahren nach einem der Ansprüche 4 bis 8, umfassend:
Empfangen eines ersten Zweiges des Ausführungsflusses;
Assoziieren des ersten Zweiges des Ausführungsflusses mit einer ersten Netzwerkvorrichtung in der Vorrichtungswarteschlange (510);
Empfangen eines zweiten Zweiges des Ausführungsflusses;
Assoziieren des zweiten Zweiges des Ausführungsflusses mit einer zweiten Netzwerkvorrichtung in der Vorrichtungswarteschlange (510); und
Kombinieren des ersten und des zweiten Zweiges des Ausführungsflusses, um Ausführungsergebnisse zu vergleichen.

10. Verfahren nach Anspruch 9, wobei die erste und die zweite Netzwerkvorrichtung benachbarte Vorrichtungen sind.

11. Verfahren nach einem der vorstehenden Ansprüche, wobei die Vielzahl von Netzwerkvorrichtungen von unterschiedlichen Verkäufern sind.

12. Verfahren nach einem der vorstehenden Ansprüche, wobei die topologische Information eine Verbindungsinformation zwischen zumindest zwei der Vielzahl von Netzwerkvorrichtungen einschließt.

13. Verfahren nach einem der vorstehenden Ansprüche, wobei die Vielzahl von Netzwerkvorrichtungen einen Netzwerkverkehrspfad bildet und die topologische Information eine Verbindungsinformation der Vielzahl von Netzwerkvorrichtungen entlang des Netzwerkverkehrspfades einschließt.

14. System, umfassend:
eine Speichervorrichtung, die Computercodes zum Automatisieren von mit einem Computernetzwerk assoziierten Netzwerkverwaltungsaufgaben ablegt; und
eine Prozessorvorrichtung, die wirksam mit der Speichervorrichtung gekoppelt ist, wobei die auf der Speichervorrichtung abgelegten Computercodes, wenn sie von der Prozessorvorrichtung ausgeführt werden, bewirken, dass die Prozessorvorrichtung das Verfahren nach einem der vorstehenden Ansprüche durchführt.

15. Computerlesbares Medium, das darauf gespeicherte Anweisungen umfasst, die, wenn sie von einem oder mehreren Prozessoren ausgeführt werden, bewirken, dass der eine oder die mehreren Prozessoren das Verfahren nach einem der Ansprüche 1 bis 13 durchführen.

## Revendications

1. Procédé, mis en œuvre par une application réseau exécutée par un dispositif processeur, permettant d'automatiser des tâches de gestion de réseau associées à un réseau d'ordinateurs, le réseau d'ordinateurs comprenant une pluralité de dispositifs de réseau, le procédé comprenant :
une récupération d'une file d'attente de dispositifs (510) incluant des informations d'une pluralité de dispositifs de réseau du réseau d'ordinateurs dans la file d'attente de dispositifs ; et
pour chaque dispositif de réseau dans la file d'attente de dispositifs :
une extraction d'informations topologiques associées au dispositif de réseau respectif ;
une mise en œuvre d'un premier flux d'exécution associé au dispositif de réseau incluant une exécution d'une commande réseau (532, 534) personnalisée pour le dispositif de réseau sur la base d'un type du dispositif de réseau ;
une mise en œuvre d'un second flux d'exécution associé à un autre dispositif de réseau incluant une exécution d'une commande réseau (536, 538) personnalisée pour le un autre dispositif de réseau sur la base d'un type du un autre dispositif de réseau, dans lequel le un autre dispositif de réseau est déterminé comme un dispositif voisin ou un dispositif de saut suivant à partir des informations topologiques extraites ; et
un traitement (550) de résultats d'exécution des premier et second flux d'exécution sur la base de données récupérées (542, 544) à partir d'une exécution de la commande réseau respective sur le dispositif de réseau et le un autre dispositif de réseau.

2. Procédé selon la revendication 1, dans lequel, lorsque le un autre dispositif de réseau est déterminé comme un dispositif de saut suivant, un traitement des résultats d'exécution comprend une mise en œuvre d'une analyse de chemin de trafic (650) pour les dispositifs de réseau.

3. Procédé selon la revendication 1, dans lequel :
lorsque le un autre dispositif de réseau est déterminé comme un dispositif voisin à partir des informations topologiques extraites,
un traitement des résultats d'exécution comprend une comparaison des résultats d'exécution des premier et second flux d'exécution pour déterminer (500) si une configuration ou un paramètre de réseau coïncide entre les dispositifs de réseau voisins.

4. Procédé selon l'une quelconque revendication précédente, comprenant en outre une génération de l'application réseau en :
fournissant une interface utilisateur graphique permettant de programmer l'application réseau ;
obtenant (710), par le biais de l'interface utilisateur graphique, la file d'attente de dispositifs (510) ;
identifiant (720), au moyen du dispositif processeur, les informations topologiques ;
pour chaque dispositif de réseau dans la file d'attente de dispositifs (510), fournissant (730) une commande réseau personnalisée exécutable par le dispositif de réseau sur la base du type du dispositif de réseau ;
recevant (740), par le biais de l'interface utilisateur graphique, un flux d'exécution pour chaque dispositif de réseau, chaque flux d'exécution incluant une ou plusieurs icônes graphiques, chacune des une ou plusieurs icônes graphiques étant associée à une ou à un ensemble de fonctions ou opérations correspondantes ;
associant (750), au moyen du dispositif processeur, le flux d'exécution à au moins un des dispositifs de réseau dans la file d'attente de dispositifs (510) sur la base des informations topologiques et de la commande réseau personnalisée correspondante ; et
générant (760), au moyen du dispositif processeur, l'application réseau sur la base de la file d'attente de dispositifs (510) et du flux d'exécution.

5. Procédé selon la revendication 4, comprenant en outre :
une obtention (710) de la file d'attente de dispositifs (510) en recevant, par le biais de l'interface utilisateur graphique, des informations fournies par un utilisateur.

6. Procédé selon la revendication 4 ou la revendication 5, comprenant en outre :
une obtention (710) de la file d'attente de dispositifs (510) en important, par le biais de l'interface utilisateur graphique, des informations à partir d'un fichier numérique.

7. Procédé selon l'une quelconque des revendications 4 à 6, comprenant en outre :
une réception, par le biais de l'interface utilisateur graphique, d'informations d'un dispositif de réseau racine ; et
une obtention (710) de la file d'attente de dispositifs (510) en découvrant automatiquement des dispositifs de réseau voisins du dispositif de réseau racine, les dispositifs de réseau voisins étant connectés physiquement ou logiquement au dispositif de réseau racine.

8. Procédé selon l'une quelconque des revendications 4 à 7, dans lequel la commande réseau personnalisée est une commande d'interface de ligne de commande et le type du dispositif de réseau inclut des informations de vendeur du dispositif de réseau.

9. Procédé selon l'une quelconque des revendications 4 à 8, comprenant :
une réception d'une première ramification du flux d'exécution ;
une association de la première ramification du flux d'exécution à un premier dispositif de réseau dans la file d'attente de dispositifs (510) ;
une réception d'une seconde ramification du flux d'exécution ;
une association de la seconde ramification du flux d'exécution à un second dispositif de réseau dans la file d'attente de dispositifs (510) ; et
une combinaison des première et seconde ramifications du flux d'exécution pour comparer des résultats d'exécution.

10. Procédé selon la revendication 9, dans lequel les premier et second dispositifs de réseau sont des dispositifs voisins.

11. Procédé selon l'une quelconque des revendications précédentes, dans lequel la pluralité de dispositifs de réseau sont en provenance de vendeurs différents.

12. Procédé selon l'une quelconque des revendications précédentes, dans lequel les informations topologiques incluent des informations de connexion entre au moins deux de la pluralité de dispositifs de réseau.

13. Procédé selon l'une quelconque des revendications précédentes, dans lequel la pluralité de dispositifs de réseau forme un chemin de trafic de réseau et les informations topologiques incluent des informations de connexion de la pluralité de dispositifs de réseau le long du chemin de trafic de réseau.

14. Système comprenant :
un dispositif mémoire stockant des codes machines pour automatiser des tâches de gestion de réseau associées à un réseau d'ordinateurs ; et
un dispositif processeur couplé fonctionnellement au dispositif mémoire, dans lequel les codes machines stockés sur le dispositif mémoire, lorsqu'ils sont exécutés par le dispositif processeur, amènent le dispositif processeur à mettre en œuvre le procédé selon l'une quelconque revendication précédente.

15. Support lisible par ordinateur comprenant des instructions stockées sur celui-ci, qui lorsqu'elles sont exécutées par un ou plusieurs processeurs, amènent les un ou plusieurs processeurs à mettre en œuvre le procédé selon l'une quelconque des revendications 1 à 13.
